# FASCICULE DE BREVET EUROPEEN

(11) **EP 2 586 198 B1**
(45) Date de publication et mention de la délivrance du brevet: **24.08.2016**
(21) Numéro de dépôt: 11725786.5
(22) Date de dépôt: 20.06.2011
(51) Int. Cl.: H04L 9/08, H04N 21/4405, H04N 21/4623, H04N 21/835, H04L 29/06

(54) **PROCEDE DE PROTECTION, PROCEDE DE DECHIFFREMENT, SUPPORT D'ENREGISTREMENT ET TERMINAL POUR CE PROCEDE DE PROTECTION**
SCHUTZVERFAHREN, ENTSCHLÜSSELUNGSVERFAHREN, DATENAUFZEICHNUNGSMEDIUM UND ENDGERÄT FÜR DIESES SCHUTZVERFAHREN
PROTECTION METHOD, DECRYPTION METHOD, RECORDING MEDIUM AND TERMINAL FOR THIS PROTECTION METHOD

(30) Priorité: 22.06.2010 FR 1054943
(43) Date de publication de la demande: 01.05.2013
(73) Titulaire: Viaccess, F-92057 Paris La Defense Cedex (FR)
(72) Inventeur: POCHON, Nicolas, F-75014 Paris (FR); CHIEZE, Quentin, F-75009 Paris (FR); LAFRANCHI, Stéphane, F-75012 Paris (FR)
(74) Mandataire: Colombo, Michel
(86) Numéro de dépôt international: PCT/EP2011/060258
(87) Numéro de publication internationale: WO 2011/161066

(56) Documents cités:
- EP-A2- 0 899 956
- US-A1- 2009 238 363
- US-A1- 2009 296 926

## Description

L'invention concerne un procédé de protection de la transmission, d'un contenu multimédia ou d'un mot de contrôle, entre un processeur de sécurité et un terminal. L'invention a également pour objet un procédé de déchiffrement d'un contenu multimédia ou d'un mot de contrôle ainsi qu'un support d'enregistrement et un terminal pour la mise en oeuvre de ce procédé de protection.

Par contenu multimédia, on désigne ici un contenu destiné à être affiché sur un écran et/ou jouer par des haut-parleurs. Typiquement, un contenu multimédia est une séquence d'un programme audiovisuel tel qu'une émission de télévision ou un film.

Pour sécuriser la transmission des contenus multimédias vers des terminaux par l'intermédiaire d'un réseau public, les contenus multimédias sont embrouillés avec les mots de contrôle avant leur transmission sur ce réseau public.

Plus précisément, un mot de contrôle est un mot codé sur plusieurs bits d'informations utilisé pour embrouiller une cryptopériode du contenu multimédia. Une cryptopériode est une période du contenu multimédia embrouillé avec le même mot de contrôle et pendant laquelle les droits d'accès à ce contenu multimédia ne sont pas modifiés.

Ici, les termes « embrouiller » et « chiffrer » sont considérés comme étant des synonymes. Il en est de même pour les termes « désembrouiller » et « déchiffrer ».

Pour sécuriser la transmission des mots de contrôle vers les terminaux par l'intermédiaire du réseau public, ces mots de contrôle sont également chiffrés avant leur transmission avec, par exemple, une clé d'abonnement Ka.

Un processeur de sécurité est un processeur qui traite des informations confidentielles telles que des clés cryptographiques ou des algorithmes cryptographiques. Pour préserver la confidentialité de ces informations, il est conçu pour être le plus robuste possible vis-à-vis des tentatives d'attaques menées par des pirates informatiques. Il est donc plus robuste vis-à-vis de ces attaques que les autres composants du terminal. Dans de nombreuses applications, ce processeur de sécurité est amovible, c'est-à-dire qu'il peut être introduit et, en alternance, retiré du terminal facilement. Dans ce cas, il se présente souvent sous la forme d'une carte à puce.

Dans le contexte de l'embrouillage des contenus multimédias, le processeur de sécurité contient des informations secrètes qui permettent de désembrouiller le contenu multimédia reçu par un terminal. Plus précisément, il existe deux modes de fonctionnement possibles pour ce processeur de sécurité :
- soit le processeur de sécurité désembrouille lui-même le contenu multimédia et transmet le contenu multimédia désembrouillé au terminal,
- soit le processeur de sécurité déchiffre le mot de contrôle et transmet le mot de contrôle déchiffré au terminal.

Si aucune précaution n'est prise, le contenu multimédia désembrouillé ou le mot de contrôle déchiffré est transmis en clair du processeur de sécurité vers le terminal.

Par « en clair » on désigne l'état d'une information qui correspond à son état avant que celle-ci soit embrouillée ou chiffrée par des mots de contrôle secrets ou des clés secrètes.

Le contenu multimédia en clair ou le mot de contrôle en clair transmis sur l'interface entre le processeur de sécurité et le terminal est vulnérable. Des attaques ont été mises au point pour exploiter cette vulnérabilité. Par exemple, il a été proposé de capter sur cette interface le mot de contrôle en clair pour ensuite le diffuser illicitement vers d'autres terminaux.

Pour remédier à cet inconvénient, il a déjà été proposé de chiffrer le contenu multimédia ou le mot de contrôle transmis du processeur de sécurité vers le terminal.

Ainsi, il existe des procédés de protection de la transmission, d'un contenu multimédia ou d'un mot de contrôle, entre le processeur de sécurité et le terminal dans lesquels :
- le processeur de sécurité construit une clé de session courante SK_{c} par diversification d'une clé racine SK_root en fonction d'un paramètre P_{c} transmis par le terminal,
- le processeur de sécurité déchiffre le contenu multimédia ou le mot de contrôle puis chiffre le contenu multimédia déchiffré ou le mot de contrôle déchiffré avec la clé de session courante SK_{c} et, enfin, transmet au terminal le contenu multimédia ou le mot de contrôle chiffré avec la clé de session courante SK_{c}, et
- le terminal déchiffre le contenu multimédia ou le mot de contrôle chiffré avec la clé SK_{c} construite, à l'aide d'un code secret C_{c}⁻¹ pour obtenir le contenu multimédia ou le mot de contrôle en clair.

Par exemple, un tel procédé est divulgué dans la demande de brevet EP 1 867 096. Dans ce procédé connu, le paramètre P_{c} est un identifiant du terminal.

Toutefois, il peut arriver que la sécurité de la clé de session courante SK_{c} soit compromise. Par exemple, des tentatives d'attaque consistent à essayer de découvrir cette clé de session courante et/ou la clé racine SK_root à partir de laquelle elle est construite.

Si la sécurité de la clé de session courante est compromise, celle-ci doit être renouvelée. Le renouvellement d'une clé de session est un processus long et compliqué. Par exemple, dans le système décrit dans la demande de brevet EP 1 867 096, cela nécessite le renouvellement de la clé racine SK_root dans chaque processeur de sécurité et de cryptogramme SK_H* ou SK_S* dans chaque terminal. Ce renouvellement ne peut être réalisé qu'en s'adressant individuellement à chaque terminal ce qui est un processus particulièrement long et qui ne peut pas être réalisé simultanément pour tous les terminaux. Le changement de clé de session nécessite aussi l'envoi de plusieurs messages au même terminal dont notamment un message pour remplacer le cryptogramme SK_H* ou SK_S* et un message pour remplacer la clé SK_root. De plus, les messages adressés individuellement à chaque terminal peuvent être facilement filtrés pour les éliminer. Ainsi, un utilisateur mal intentionné peut facilement empêcher le renouvellement de sa clé de session.

De l'état de la technique est également connu de EP0899956A2 et de US2009/238363A1.

L'invention vise à remédier à au moins l'un de ces inconvénients. Elle a donc pour objet un procédé de protection de la transmission, d'un contenu multimédia ou d'un mot de contrôle, conforme à la revendication 1.

Dans le procédé ci-dessus, le changement de la clé de session est plus rapide car le ou les paramètres permettant de renouveler la clé de session aussi bien dans le processeur de sécurité que dans le terminal sont transmis dans le même message. Ainsi, un seul message est suffisant pour activer le changement de la clé de session. De plus, ces paramètres sont contenus dans le même message que celui contenant le contenu multimédia embrouillé ou le mot de contrôle chiffré. Ainsi, si ce message est éliminé pour empêcher le renouvellement de la clé de session, le désembrouillage du contenu multimédia est rendu impossible puisque le contenu multimédia embrouillé ou le mot de contrôle chiffré nécessaire pour cela n'est pas transmis au processeur de sécurité.

Enfin, chaque terminal contient déjà par avance plusieurs codes secrets permettant chacun de déchiffrer le contenu multimédia ou le mot de contrôle chiffré avec une clé de session SKᵢ différente des autres clés de session. Ainsi, le changement de la clé de session peut être réalisé instantanément sans qu'il y ait une période transitoire pendant laquelle l'ancienne clé de session n'est plus utilisable alors que la nouvelle clé de session n'est pas encore disponible.

Les modes de réalisation de ce procédé de protection peuvent comporter une ou plusieurs des caractéristiques des revendications dépendantes.

Ces modes de réalisation du procédé de protection présentent en outre les avantages suivants :
- lorsque le code secret est un code exécutable ou interprétable, sa compromission ne donne aucune information sur la clé racine ou l'algorithme cryptographique mis en oeuvre pour réaliser les autres codes secrets exécutables ou interprétables,
- l'utilisation d'un message ECM pour transmettre le paramètre P_{c} permet de réaliser un renouvellement de cette clé de session à une fréquence très élevée,
- transmettre le contenu multimédia ou le mot de contrôle chiffré deux fois augmente la sécurité du système.

L'invention a également pour objet un procédé de déchiffrement d'un contenu multimédia ou d'un mot de contrôle par un terminal conforme à la revendication 9.

L'invention a également pour objet un support d'enregistrement d'informations comportant des instructions pour la mise en oeuvre d'un des procédés précédents, lorsque ces instructions sont exécutées par un calculateur électronique.

Enfin, l'invention a également pour objet le terminal de déchiffrement conforme à la revendication 11.

L'invention sera mieux comprise à la lecture de la description qui va suivre, données uniquement à titre d'exemple non limitatif et faite en se référant aux dessins sur lesquels :
- la figure 1 est une illustration schématique d'un système de transmission et de réception de contenus multimédias embrouillés,
- la figure 2 est une illustration schématique et partielle d'un message ECM utilisé dans le système de la figure 1,
- la figure 3 est une illustration schématique et partielle d'un message EMM (Entitlement Management Message) utilisé dans le système de la figure 1,
- la figure 4 est une illustration d'une table également utilisée dans le système de la figure 1,
- la figure 5 est un organigramme d'un procédé de transmission et de réception d' contenu multimédia embrouillé mis en oeuvre à l'aide du système de la figure 1, et
- la figure 6 est un organigramme d'un procédé d'enregistrement de codes secrets dans un terminal du système de la figure 1.

Dans ces figures, les mêmes références sont utilisées pour désigner les mêmes éléments.

Dans la suite de cette description, les caractéristiques et fonctions bien connues de l'homme du métier ne sont pas décrites en détail. De plus, la terminologie utilisée est celle des systèmes d'accès conditionnels à des contenus multimédias. Pour plus d'informations sur cette terminologie, le lecteur peut se reporter au document suivant :
- « Functional Model of Conditional Access System », EBU Review, Technical European Broadcasting Union, Brussels, BE, n° 266, 21 décembre 1995.

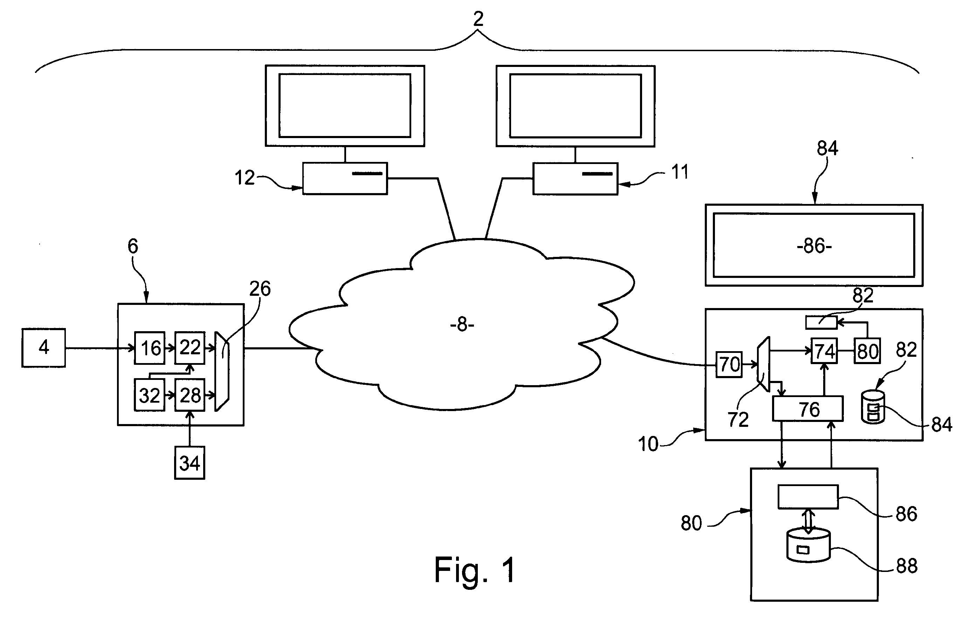

La figure 1 représente un système 2 d'émission et de réception de contenus multimédias embrouillés. Par exemple, chaque contenu multimédia correspond à une séquence d'un programme audiovisuel tel qu'une émission de télévision ou un film.

Les contenus multimédias en clair sont générés par une ou plusieurs sources 4 et transmis à un dispositif 6 de diffusion. Le dispositif 6 diffuse les contenus multimédias simultanément vers une multitude de terminaux de réception à travers un réseau 8 de transmission d'informations. Les contenus multimédias diffusés sont synchronisés temporellement les uns avec les autres pour, par exemple, respecter une grille préétablie de programmes.

Le réseau 8 est typiquement un réseau grande distance de transmission d'informations tel que le réseau Internet ou un réseau satellitaire ou tout autre réseau de diffusion tel que celui utilisé pour la transmission de la télévision numérique terrestre (TNT).

Pour simplifier la figure 1, seuls trois terminaux 10 à 12 de réception sont représentés.

Le dispositif 6 comprend un encodeur 16 qui compresse les contenus multimédias qu'il reçoit. L'encodeur 16 traite des contenus multimédias numériques. Par exemple, cet encodeur fonctionne conformément à la norme MPEG2 (Moving Picture Expert Group - 2) ou la norme UIT-T H264.

Les contenus multimédias compressés sont dirigés vers une entrée d'un embrouilleur 22. L'embrouilleur 22 embrouille chaque contenu multimédia compressé pour conditionner sa visualisation à certaines conditions telles que l'achat d'un titre d'accès par les utilisateurs des terminaux de réception. Les contenus multimédias embrouillés sont restitués sur une sortie raccordée à l'entrée d'un multiplexeur 26.

L'embrouilleur 22 embrouille chaque contenu multimédia compressé à l'aide d'un mot de contrôle CW_{j,t} qui lui est fourni, ainsi qu'à un système 28 d'accès conditionnel, par un générateur 32 de clés.

Le système 28 est plus connu sous l'acronyme CAS (Conditional Access System).

L'indice j est un identifiant du canal sur lequel est diffusé le contenu mulimédia embrouillé et l'indice t est un identifiant de la cryptopériode embrouillée avec ce mot de contrôle. Dans la suite de cette description, la cryptopériode actuellement désembrouillée par les terminaux est la cryptopériode t-1.

Typiquement, cet embrouillage est conforme à une norme telle que la norme DVB-CSA (Digital Video Broadcasting - Common Scrambling Algorithm), ISMA Cryp (Internet Streaming Media Alliance Cryp), SRTP (Secure Real-time Transport Protocol), AES (Advanced Encryption Standard), ... etc.

Le système 28 génère des messages ECM (Entitlement Control Message) contenant au moins le cryptogramme CW*_{j,t} du mot de contrôle CW_{j,t} généré par le générateur 32 et utilisé par l'embrouilleur 22 pour embrouiller la cryptopériode t du canal j. Ces messages ECM et les contenus multimédias embrouillés sont multiplexés par le multiplexeur 26, ces derniers étant respectivement fournis par le système 28 d'accès conditionnel et par l'embrouilleur 22, avant d'être transmis sur le réseau 8.

Le système 28 est également capable d'insérer dans le message ECM deux paramètres Pᵢ et Pxᵢ.

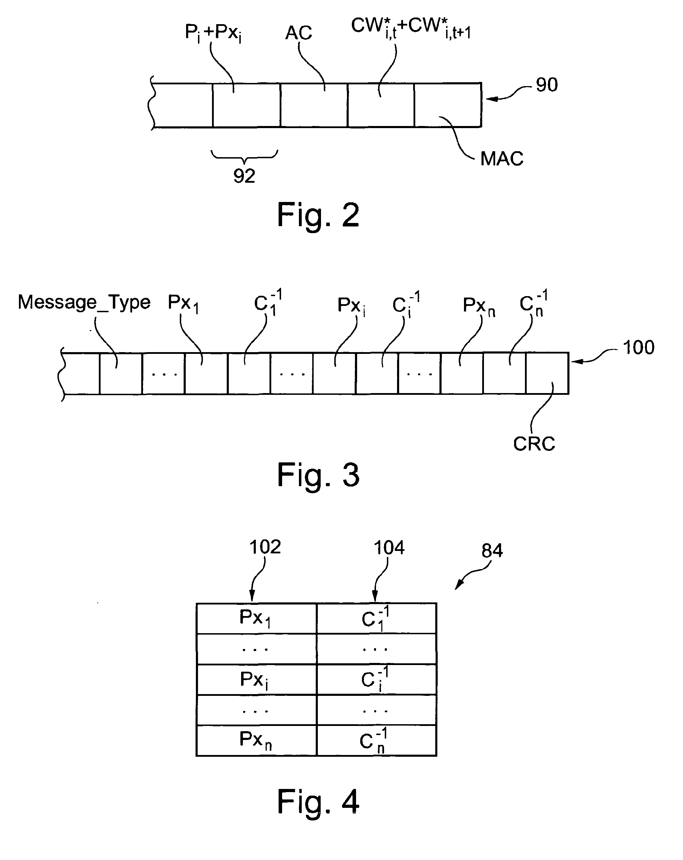

Le système 28 génère aussi des messages EMM (Entitlement Management Message) tel que celui illustré sur la figure 3.

A titre d'illustration, ici, l'embrouillage et le multiplexage des contenus multimédias est conforme au protocole DVB-Simulcrypt (ETSI TS 103 197).

Le système 28 est également raccordé à une unité 34 de gestion du renouvellement des clés de session. Cette unité 34 fournit au système 28 les paramètres Pᵢ, Pxᵢ ainsi que des codes secrets associés Cᵢ⁻¹. Ces paramètres et ces codes sont décrits plus en détail plus loin.

Par exemple, les terminaux 10 à 12 sont identiques et seul le terminal 10 est décrit plus en détail.

Le terminal 10 comprend un récepteur 70 de contenus multimédias diffusés. Ce récepteur 70 est raccordé à l'entrée d'un démultiplexeur 72 qui transmet d'un côté le contenu multimédia à un désembrouilleur 74 et d'un autre côté les messages ECM et EMM (Entitlement Management Message) à un module 76 de sécurité.

Le désembrouilleur 74 désembrouille le contenu multimédia embrouillé à partir du mot de contrôle transmis par le module 76. Le contenu multimédia désembrouillé est transmis à un décodeur 80 qui le décode. Le contenu multimédia décompressé ou décodé est transmis à une carte graphique 82 qui pilote l'affichage de ce contenu multimédia sur un afficheur 84 équipé d'un écran 86.

L'afficheur 84 affiche en clair le contenu multimédia sur l'écran 86.

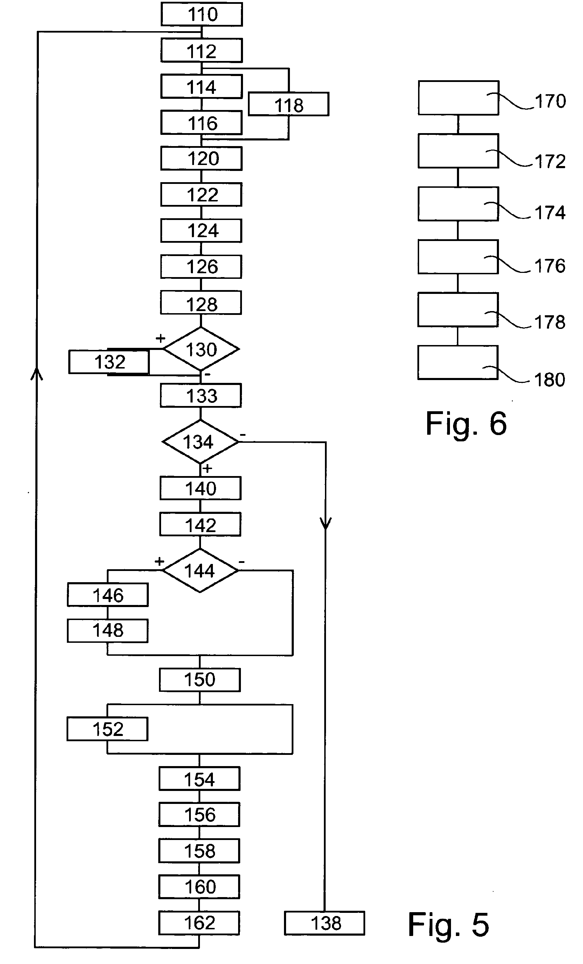

Le module 76 gère les échanges d'informations avec un processeur de sécurité amovible 80. En particulier, il coopère avec le processeur 80 pour protéger l'interface entre ce processeur 80 et le terminal 10. A cet effet, ce module 76 est placé en coupure de flux entre les informations transmises du terminal 10 vers le processeur 80 et vice versa. Le module 76 est par exemple réalisé à partir d'un calculateur électronique programmable. Il est raccordé à une mémoire 82 comportant l'ensemble des instructions et des données nécessaires pour l'exécution des procédés des figures 5 et 6. Cette mémoire 82 comporte donc en particulier les éléments suivants :
- un identifiant D-ID du terminal 10 permettant d'identifier ce terminal 10 parmi l'ensemble des terminaux du système 2,
- un cryptogramme TSK* d'une clé de session TSK obtenue par diversification d'une clé racine TSK_root avec l'identifiant D_ID,
- une clé personnelle Ki permettant de déchiffrer le cryptogramme TSK*,
- une table 84 associant à chaque paramètre Pxᵢ un code secret Cᵢ⁻¹ permettant de déchiffrer une information chiffrée avec une clé de session courante SKi, et
- les codes Cᵢ⁻¹.

Dans ce mode de réalisation, chaque code Cᵢ⁻¹ est un code d'une fonction de déchiffrement des informations chiffrées avec une clé de session respective SKᵢ. Chaque code Cᵢ⁻¹ est directement exécutable par le module 16. Chaque code Cᵢ⁻¹ correspond à une fonction de déchiffrement admettant comme seul paramètre l'information à déchiffrer. Ce code est donc déjà paramétré avec la clé de session Skᵢ. Cette clé de session SKᵢ est obtenue par diversification d'une clé racine SK_root à l'aide d'un paramètre Pᵢ.

Le processeur 80 est réalisé également à partir d'un calculateur électronique 86 implémentant un module de chiffrement et de déchiffrement d'informations. A cet effet, le processeur 80 comporte également une mémoire 88 raccordée au calculateur 86. Cette mémoire 88 est une mémoire sécurisée contenant notamment les informations secrètes nécessaires pour l'exécution du procédé de la figure 5. En particulier, cette mémoire contient notamment :
- des titres d'accès à un ou plusieurs contenus multimédias,
- une ou plusieurs clés d'abonnement Ka,
- la clé racine TSK_root,
- la clé racine SK_root, et
- des instructions pour l'exécution du procédé de la figure 5.

La figure 2 représente une portion d'une trame d'un message ECM 90 susceptible d'être généré par le système 28. Ce message ECM contient en particulier un champ 92 contenant les paramètres Pᵢ et Pxᵢ. Le paramètre Pxᵢ peut être tout ou partie du paramètre Pᵢ et vice versa. Le rôle de ces paramètres Pᵢ et Pxᵢ est décrit plus en détail en regard de la figure 5.

De façon classique, ce message ECM 90 contient également :
- l'identifiant du canal,
- les cryptogrammes CW*_{j,t} et CW*_{j,t+1} des mots de contrôle CW_{j,t} et CW_{j,t+1} permettant de désembrouiller les cryptopériodes t et t+1 du canal j,
- des droits d'accès DA destinés à être comparés à des titres d'accès acquis par l'utilisateur, et
- une signature ou une redondance cryptographique MAC permettant de vérifier l'intégrité du message ECM.

La figure 3 représente schématiquement et partiellement un message EMM 100 susceptible d'être généré par le système 28. Ce message EMM 100 contient notamment un identifiant Message_Type permettant d'indiquer que ce message EMM est à destination du terminal et non pas du processeur de sécurité.

Ce message 100 contient également :
- plusieurs codes Cᵢ⁻¹ où i est compris entre 1 et n, n étant un entier strictement supérieur ou égal à deux,
- les paramètres Pxᵢ, chacun de ces paramètres étant associé au code correspondant Cᵢ⁻¹, et
- un code CRC permettant de vérifier l'intégrité du message 100.

La figure 4 représente un exemple possible de structure de la table 84. Cette table 84 comprend deux colonnes 102 et 104. La colonne 102 comprend le paramètre Pxᵢ tandis que la colonne 104 comprend le code Cᵢ⁻¹ associé correspondant ou l'adresse dans la mémoire 82 de ce code Cᵢ⁻¹.

Le fonctionnement du système 2 va maintenant être décrit en regard du procédé de la figure 5.

Initialement, lors d'une phase 110 d'initialisation, le processeur 80 est inséré à l'intérieur du terminal 10. En réponse, le terminal 10 transmet son identifiant D-ID au processeur 80. Celui-ci, génère alors une clé de session TSK. Cette clé de session TSK est obtenue par diversification de la clé racine TSK_root enregistrée dans la mémoire 88.

Les détails sur le chiffrement et le déchiffrement des mots de contrôle à l'aide de cette clé de session TSK ne sont pas décrits ici en détail. En effet, le procédé de chiffrement des mots de contrôle sur l'interface entre le processeur 80 et le terminal 10 est ici le même que celui décrit dans la demande de brevet EP 1 867 096. Ainsi, le lecteur peut se référer à cette demande de brevet pour plus d'informations.

Pendant la phase d'initialisation, le processeur 80 reçoit également, par exemple par l'intermédiaire de messages EMM, des titres d'accès et des clés d'abonnement Ka. Ces titres d'accès et clés Ka lui permettent de déchiffrer les cryptogrammes des mots de contrôle des canaux pour lesquels il a souscrit un abonnement auprès d'un opérateur.

La transmission d'un contenu multimédia du dispositif 6 jusqu'à un terminal est maintenant décrite dans le cas particulier du terminal 10.

Lors d'une étape 112, le générateur 32 génère un mot de contrôle qui est transmis à l'embrouilleur 22 et au système 28.

Lors d'une étape 114, ce mot de contrôle est chiffré avec une clé d'abonnement Ka pour obtenir un cryptogramme CW*_{Ka}. Par exemple, la clé Ka est renouvelée une fois par mois.

Ensuite, lors d'une étape 116, le système 28 génère un message ECM contenant le cryptogramme CW*_{Ka} ainsi que les droits d'accès correspondant. Eventuellement, ce message ECM contient également des paramètres P_{c} et Px_{c} si un renforcement du niveau de sécurité de la protection de l'interface entre le processeur 80 est le terminal 10 est requis. Les paramètres P_{c} et Px_{c} sont choisis parmi les paires de paramètres Pᵢ et Pxᵢ utilisées pour créer la table 84.

En parallèle, lors d'une étape 118, le mot de contrôle généré est transmis à l'embrouilleur 22 qui embrouille une cryptopériode du contenu multimédia à l'aide de ce mot de contrôle avant de transmettre la cryptopériode embrouillée au multiplexeur 26.

Lors d'une étape 120, le multiplexeur 26 multiplexe les messages ECM générés avec le contenu multimédia embrouillé puis les diffuse à l'ensemble des terminaux du système 2 par l'intermédiaire du réseau 8.

Lors d'une étape 122, le terminal 10 reçoit, à l'aide de son récepteur 70, les signaux diffusés par le dispositif 6.

Lors d'une étape 124, ces signaux sont démultiplexés par le démultiplexeur 72.

Lors d'une étape 126, le contenu multimédia embrouillé est alors transmis au désembrouilleur 74.

Lors d'une étape 128, les messages ECM et EMM sont quant à eux transmis vers le module 76 de sécurité.

Lors d'une étape 130, le module 76 vérifie si des nouveaux paramètres P_{c}, Px_{c} sont présents dans le message ECM reçu. Par nouveaux paramètres P_{c}, Px_{c} on entend des paramètres P_{c}, Px_{c} qui ont des valeurs différentes de celles précédemment reçues.

Dans l'affirmative, il procède à une étape 132 lors de laquelle il extrait le paramètre Px_{c} puis sélectionne le code C_{c}⁻¹ associé à ce paramètre à l'aide de la table 84.

A l'issu de l'étape 132 ou dans le cas où le message ECM ne comporte pas de paramètre P_{c}, Px_{c} ou de nouveaux paramètres P_{c}, Px_{c}, lors d'une étape 133, le module 76 transmet le message ECM reçu au processeur 80.

Lors d'une étape 134, le processeur 80 compare les titres d'accès contenus dans la mémoire 88 aux droits d'accès contenus dans le message ECM reçu.

Si les titres d'accès ne correspondent pas au droit d'accès, alors le processeur 80 procède à une étape 138 d'inhibition du désembrouillage du contenu multimédia reçu. Par exemple, à cet effet, il ne transmet pas le mot de contrôle nécessaire au désembrouillage du contenu multimédia au terminal 10.

Dans le cas contraire, lors d'une étape 140, le processeur 80 déchiffre le cryptogramme CW*_{Ka} avec la clé Ka de manière à obtenir le mot de contrôle CW en clair.

Ensuite, lors d'une étape 142, le calculateur 86 chiffre le mot de contrôle CW à l'aide de la clé de session TSK enregistrée dans la mémoire 88 et générée lors de la phase 110. Le cryptogramme CW*_{TSK} est alors obtenu.

Lors d'une étape 144, le processeur 80 vérifie si un paramètre P_{c} est présent dans le message ECM reçu.

Dans l'affirmative, le processeur 80 procède alors à une étape 146 lors de laquelle il construit la nouvelle clé de session SK_{c} par diversification de la clé racine SK_root à l'aide du paramètre P_{c} reçu. L'étape 146 est réalisée uniquement lorsqu'il s'agit d'un nouveau paramètre P_{c}. Si le paramètre P_{c} a déjà été reçu, la clé SK_{c} a déjà été construite et on peut directement procéder à l'étape suivante.

Ensuite, lors d'une étape 148, il chiffre le cryptogramme CW*_{TSK} à l'aide de la clé SK_{c} pour obtenir un cryptogramme CW**_{(TSK)(SKc)}. Ce cryptogramme CW**_{(TSK)(SKc)} correspondant au mot de contrôle chiffré deux fois une fois par la clé TSK et une fois par la clé SK_{c}. On dit également dans ce cas que le mot de contrôle CW est surchiffré avec la clé SK_{c}.

A l'issu de l'étape 148 ou dans le cas où le message ECM reçu ne comporte pas de paramètre P_{c}, lors d'une étape 150, le processeur 80 procède à la transmission du cryptogramme du mot de contrôle vers le terminal 10. Selon que les étapes 146, 148 ont été exécutées ou non, ce cryptogramme est soit le cryptogramme CW**_{(TSK)(SKc)} soit le cryptogramme CW*_{TSK}.

Ensuite, si le paramètre Px_{c} était présent dans le message ECM reçu, lors d'une étape 152, le module 76 déchiffre une première fois le cryptogramme CW**_{(TSK) (SKc)} en exécutant le code C_{c}⁻¹ sélectionné lors de l'étape 132. Plus précisément, lors de cette étape, le code C_{c}⁻¹ reçoit uniquement comme paramètre d'entrée le cryptogramme CW**_{(TSK)(SKc)} à déchiffrer. A ce stade, il n'est pas nécessaire qu'il soit également paramétré avec la clé de session SK_{c} puisque ce paramètre est déjà intégré au code exécutable. A l'issue de l'étape 152, le cryptogramme CW*_{TSK} est obtenu à partir du cryptogramme CW**_{(TSK)(SKc)}.

Après l'étape 152 ou si le mot de contrôle transmis par le processeur 80 n'est chiffré qu'une seule fois, lors d'une étape 154, le module 76 déchiffre le cryptogramme CW*_{TSK} à l'aide de la clé TSK. Lors de cette étape 154, la clé TSK est par exemple obtenue en déchiffrant un cryptogramme de cette clé stocké dans la mémoire 82 à l'aide de sa clé personnelle Kᵢ. A l'issu de l'étape 154, le mot de contrôle CW en clair est obtenu.

Lors d'une étape 156, le module 76 transmet ce mot de contrôle CW en clair au désembrouilleur 74 qui désembrouille alors la cryptopériode correspondante du contenu multimédia embrouillé avec ce mot de contrôle.

Lors d'une étape 158, le contenu multimédia désembrouillé est transmis au décodeur 80 qui le décode.

Lors d'une étape 160, la carte graphique reçoit le contenu multimédia décodé et commande son affichage sur l'écran 86. Ainsi, lors d'une étape 162 le contenu multimédia en clair est affiché sur l'écran 86.

Dans le procédé de la figure 5, lorsqu'un renforcement de la protection de l'interface entre le processeur 80 et le terminal 10 est requis, il suffit d'insérer des paramètres P_{c} et Px_{c} dans un message ECM. A partir de ce moment, le mot de contrôle transmis du processeur 80 vers le terminal 10 est chiffré deux fois au lieu d'une seule fois. De plus, pour changer la clé de session SK_{c}, il suffit de changer les paramètres P_{c} et Px_{c} contenus dans le message ECM. Toutefois, ce changement de clé de session SK_{c} suppose que les codes C_{c}⁻¹ correspondant ait été enregistrés au préalable dans la mémoire 82. Ceci est réalisé à l'aide du procédé de la figure 6 suivant.

Lorsqu'un renforcement de la sécurité est requis, lors d'une étape 170, plusieurs paires de paramètres Pᵢ, Pxᵢ sont choisies.

Ensuite, lors d'une étape 172, l'unité 34 construit une clé de session SKᵢ pour chaque paramètre Pᵢ choisi lors de l'étape 170. Ici, chaque clé SKᵢ est obtenue par diversification de la clé racine SK_root en fonction du paramètre P_{i.} Un exemple de procédé de diversification est décrit dans la demande de brevet EP 1 867 096.

Ensuite, lors d'une étape 174, les codes Cᵢ⁻¹ permettant de déchiffrer les cryptogrammes obtenus avec les clés Skᵢ sont générés. Par exemple, à cet effet, pour chaque code Cᵢ⁻¹ le même algorithme de déchiffrement que celui utilisé par le processeur 80 est paramétré avec la clé SKᵢ puis compilé à l'aide d'un compilateur. De préférence, le code exécutable est rendu robuste vis-à-vis des tentatives de cryptanalyse visant par exemple à identifier la clé de session, la clé racine ou l'algorithme utilisé pour déchiffrer les messages. Par exemple, à cet effet, l'enseignement du document suivant est mis en oeuvre :
S. Chow, P. Eisen, H. Johnson, P. C. Van Oorchot, « White Box Cryptography And an AES Implementation », Proceedings of SAC 2002, 9th Annual Workshop on Selected Area in Cryptography, août 15-16 2002, Saint John's , Canada.

Une fois les codes Cᵢ⁻¹ générés, lors d'une étape 176, ceux-ci sont transmis avec les paramètres Pxᵢ correspondants au système 28 du dispositif 6. A cet effet, le système 28 génère un message EMM tel que le message EMM 100 qui est ensuite multiplexé avec le contenu multimédia embrouillé et diffusé simultanément à l'ensemble des terminaux du système 2.

En réponse à la réception de ce message EMM 100, lors d'une étape 178, celui-ci est transmis au module 76 de sécurité.

Lors d'une étape 180, le module 76 de sécurité met à jour la table 84 à partir des informations contenues dans ce message EMM et enregistre les codes Cᵢ⁻¹ dans la mémoire 82.

A partir de ce moment là, le surchiffrement des mots de contrôle avec l'une des clés SKi peut être activé et le changement de la clé de surchiffrement peut être également réalisé rapidement et fréquemment.

De nombreux autres modes de réalisation sont possibles. Par exemple, les codes Cᵢ⁻¹ ne sont pas nécessairement des codes exécutables et peuvent être remplacés par des codes directement interprétables par une machine virtuelle implémentée dans le terminal 10. Typiquement, la machine virtuelle est une machine virtuelle Java®.

Le code Cᵢ⁻¹ n'est pas nécessairement un code exécutable ou interprétable. En variante, le code Cᵢ⁻¹ est une clé Skᵢ ou un cryptogramme ce cette clé SKᵢ.

Les paramètres Pᵢ et Pxᵢ peuvent être toute ou partie d'un même paramètre. En particulier, le paramètre Pxᵢ peut être identique au paramètre Pᵢ. Dans cette variante, seul le paramètre Pᵢ est alors transmis.

Les paramètres Pᵢ ou Pxᵢ peuvent faire l'objet de différentes opérations avant d'être utilisés par le terminal ou le processeur 80. Par exemple, ces paramètres peuvent être utilisés comme une graine servant à initialiser un générateur de nombres pseudo-alétoires. C'est alors le nombre pseudo-aléatoire généré qui est utilisé pour diversifier la clé racine SK_root ou utilisé par le module 76.

Dans une autre variante, seul un paramètre Pxᵢ et le code Cᵢ⁻¹ associé sont envoyés aux terminaux avant l'utilisation de la clé SKᵢ. Ainsi, la mémoire 82 comporte uniquement le code C_{c}⁻¹ et le code Cᵢ⁻¹ qui sera utilisé immédiatement après le code C_{c}⁻¹. Cela évite d'exposer inutilement les autres codes Cᵢ⁻¹ susceptibles d'être utilisés.

Le changement de la clé SK_{c} peut intervenir immédiatement comme décrit précédemment ou après un nombre prédéterminé de cryptopériodes reçues après la réception du message contenant le nouveau paramètre P_{c}.

Dans une autre variante, le premier chiffrement du mot de contrôle à l'aide de la clé TSK n'est pas mis en oeuvre. Dans ce cas là, le mot de contrôle est uniquement chiffré à l'aide de la clé de session SK_{c}.

Le processeur de sécurité n'est pas nécessairement amovible. Par exemple, il est fixé sans aucun degré de liberté à l'intérieur du terminal 10.

Le processeur de sécurité ne prend pas nécessairement la forme d'une carte à puce. Par exemple, il peut également se présenter sous la forme d'une clé USB (Universal Serial Bus). Dans une autre variante, il n'est pas amovible mais intégré au boîtier du terminal.

Les éléments du terminal 10 ne sont pas nécessairement contenus dans un même boîtier. Par exemple, ces éléments peuvent être répartis sur un réseau local. Dans ce cas, typiquement, un boîtier recevant les signaux transmis par le dispositif 6 utilise le processeur 80 pour déchiffrer les mots de contrôle et pour les chiffrer à l'aide de la clé de session SK_{c}. Les mots de contrôle ainsi chiffrés sont alors transmis par l'intermédiaire du réseau local à un ou plusieurs autres boîtiers placés, par exemple, à proximité d'écrans d'affichage. Ces autres boîtiers intègrent chacun un module de sécurité, par exemple, identique au module 76 précédemment décrit de manière à pouvoir déchiffrer et obtenir en clair le mot de contrôle nécessaire au désembrouillage des contenus multimédias reçus.

Enfin, le système 2 a été décrit dans le cas particulier ou le processeur 80 est uniquement utilisé pour déchiffrer les mots de contrôle reçus. Dans une autre variante, le processeur 80 désembrouille le contenu multimédia et c'est le contenu multimédia désembrouillé qui est transmis du processeur 80 vers le terminal 10. Dans cette variante, le chiffrement à l'aide de la clé SK_{c} est appliqué au contenu multimédia transmis du processeur 80 vers le terminal 10 et non plus au mot de contrôle puisque celui-ci n'est plus transmis sur l'interface entre le terminal 10 et le processeur 80.

## Revendications

1. Procédé de protection de la transmission, d'un contenu multimédia ou d'un mot de contrôle, entre un processeur de sécurité introduit dans un terminal de réception et ce terminal de réception, dans lequel :
- le processeur de sécurité construit (146) une clé de session courante SK_{c} par diversification d'une clé racine SK_root en fonction d'un paramètre P_{c} transmis par le terminal,
- le processeur de sécurité déchiffre (140) le contenu multimédia ou le mot de contrôle puis chiffre (148) le contenu multimédia déchiffré ou le mot de contrôle déchiffré avec la clé courante SK_{c} et, enfin, transmet (150) au terminal le contenu multimédia ou le mot de contrôle chiffré avec la clé de session courante SK_{c}, et
- le terminal déchiffre (152) le contenu multimédia ou le mot de contrôle chiffré avec la clé SK_{c} construite, à l'aide d'un code secret C_{c}⁻¹ pour obtenir le contenu multimédia ou le mot de contrôle en clair,
**caractérisé en ce que** le procédé comprend :
- l'enregistrement (180) par avance dans le terminal de plusieurs codes secrets Cᵢ⁻¹, chaque code secret Cᵢ⁻¹ permettant uniquement le déchiffrement du contenu multimédia ou du mot de contrôle chiffré par une clé de session SKᵢ respective obtenue par diversification de la clé SK_root avec un paramètre Pᵢ, l'un de ces paramètres Pᵢ étant le paramètre P_{c},
- la réception (122) du paramètre P_{c} par le terminal dans un message contenant également un contenu multimédia ou un mot de contrôle à déchiffrer par le processeur de sécurité, et
- en réponse à la réception du paramètre P_{c}, la sélection (132) par le terminal, parmi l'ensemble des codes secrets enregistrés, du code secret C_{c}⁻¹ à utiliser pour déchiffrer le contenu multimédia ou le mot de contrôle chiffré avec la clé SK_{c}, en fonction du paramètre P_{c} ou d'un autre paramètre contenu dans le même message.

2. Procédé selon la revendication 1, dans lequel chaque code secret Cᵢ⁻¹ est un code directement exécutable ou interprétable par le terminal, ce code étant déjà paramétré par sa clé de session SKᵢ de manière à ne pas avoir à être paramétré à nouveau par cette clé SKᵢ lors de son exécution ou interprétation.

3. Procédé selon la revendication 1, dans lequel chaque code secret Cᵢ⁻¹ est une clé Skᵢ ou un cryptogramme de cette clé SKᵢ rendant possible le déchiffrement du contenu multimédia ou du mot de contrôle chiffré avec la clé SKᵢ lorsque celle-ci est utilisée pour paramétrer un algorithme de déchiffrement préenregistré dans le terminal.

4. Procédé selon l'une quelconque des revendications précédentes, dans lequel le message contenant le paramètre P_{c} est un message ECM (Entitlement Control Message).

5. Procédé selon l'une quelconque des revendications précédentes, dans lequel le processeur de sécurité transmet (150) le contenu multimédia ou le mot de contrôle chiffré deux fois, une fois par une clé spécifique déterminée de façon indépendante du paramètre P_{c} et une autre fois par la clé de session Sk_{c}.

6. Procédé selon la revendication 5, dans lequel le processeur vérifie (144) la présence du paramètre P_{c} dans le message transmis et, en cas d'absence du paramètre P_{c}, le processeur ne chiffre (150) pas le contenu multimédia ou le mot de contrôle avec la clé de session courante SK_{c}.

7. Procédé selon l'une quelconque des revendications précédentes, dans lequel le ou les codes secrets C_{c}⁻¹ sont transmis au terminal avant la réception du message contenant le paramètre P_{c} par l'intermédiaire d'un message EMM (Entitlement Management Message).

8. Procédé selon l'une quelconque des revendications précédentes, dans lequel le procédé comporte l'enregistrement (180) par avance dans le terminal de strictement plus de deux codes secrets Cᵢ⁻¹.

9. Procédé de déchiffrement d'un contenu multimédia ou d'un mot de contrôle par un terminal pour la mise en oeuvre d'un procédé conforme à l'une quelconque des revendications précédentes, le procédé comportant :
- la transmission (128) d'un paramètre P_{c} à un processeur de sécurité, introduit dans ce terminal, apte à déchiffrer le contenu multimédia ou le mot de contrôle,
- la réception par le terminal du contenu multimédia ou du mot de contrôle chiffré avec une clé de session courante SK_{c} construite par le processeur de sécurité par diversification d'une clé racine SK_root en fonction du paramètre P_{c} transmis par le terminal,
- le déchiffrement (152), par le terminal, du contenu multimédia ou du mot de contrôle chiffré avec la clé SK_{c} à l'aide d'un code secret C_{c}⁻¹ pour obtenir le contenu multimédia ou le mot de contrôle en clair,
**caractérisé en ce que** le procédé comprend :
- l'enregistrement (180) par avance dans le terminal de plusieurs codes secrets Cᵢ⁻¹, chaque code secret Cᵢ⁻¹ permettant uniquement le déchiffrement du contenu multimédia ou du mot de contrôle chiffré par une clé de session SKᵢ respective obtenue par diversification de la clé SK_root avec un paramètre Pᵢ, l'un de ces paramètres Pᵢ étant le paramètre P_{c},
- la réception (122) du paramètre P_{c} par le terminal dans un message contenant également un contenu multimédia ou un mot de contrôle à déchiffrer par le processeur de sécurité, et
- en réponse à la réception du paramètre P_{c}, la sélection (132) par le terminal parmi l'ensemble des codes secrets enregistrés, du code secret C_{c}⁻¹ à utiliser pour déchiffrer le contenu multimédia ou le mot de contrôle chiffré avec la clé SK_{c} en fonction du paramètre P_{c} ou d'un autre paramètre contenu dans le même message.

10. Support d'enregistrement d'informations, **caractérisé en ce qu'**il comporte des instructions pour l'exécution d'un procédé conforme à l'une quelconque des revendications précédentes, lorsque ces instructions sont exécutées par un calculateur électronique.

11. Terminal de déchiffrement d'un contenu multimédia ou d'un mot de contrôle chiffré, le terminal (10) étant apte :
- à transmettre un paramètre P_{c} à un processeur de sécurité, introduit dans ce terminal, apte à déchiffrer le contenu multimédia ou le mot de contrôle,
- à recevoir le contenu multimédia ou le mot de contrôle chiffré avec une clé de session courante SK_{c} construite par le processeur de sécurité par diversification d'une clé racine SK_root en fonction du paramètre P_{c} transmis par le terminal,
- à déchiffrer le contenu multimédia ou le mot de contrôle chiffré avec la clé SK_{c} à l'aide d'un code secret C_{c}⁻¹ pour obtenir le contenu multimédia ou le mot de contrôle en clair,
**caractérisé en ce que** :
- le terminal comprend une mémoire (82) dans laquelle est enregistré par avance plusieurs codes secrets Cᵢ⁻¹, chaque code secret Cᵢ⁻¹ permettant uniquement le déchiffrement du contenu multimédia ou du mot de contrôle chiffré par une clé de session SKᵢ respective obtenue par diversification de la clé SK_root avec un paramètre Pᵢ, l'un de ces paramètres Pᵢ étant le paramètre P_{c}, et
- le terminal est apte :
• à recevoir le paramètre P_{c} dans un message contenant également un contenu multimédia ou un mot de contrôle à déchiffrer par le processeur de sécurité, et
• à sélectionner, parmi l'ensemble des codes secrets enregistrés, le code secret C_{c}⁻¹ à utiliser pour déchiffrer le contenu multimédia ou le mot de contrôle chiffré avec la clé SK_{c} en fonction du paramètre P_{c} ou d'un autre paramètre contenu dans le même message, en réponse à la réception du paramètre P_{c}.

## Patentansprüche

1. Verfahren zum Schützen der Übertragung eines Multimedia-Inhalts oder eines Steuerworts zwischen einem Sicherheitsprozessor, der in ein Empfangsendgerät eingebaut ist, und diesem Empfangsendgerät, wobei:
- der Sicherheitsprozessor einen aktuellen Sitzungsschlüssel SK_{c} durch Diversifikation eines Wurzelschlüssels SK_root als Funktion eines von dem Endgerät übertragenen Parameters P_{c} konstruiert (146),
- der Sicherheitsprozessor den Multimedia-Inhalt oder das Steuerwort entschlüsselt (140), dann den entschlüsselten Multimedia-Inhalt oder das entschlüsselte Steuerwort mit dem aktuellen Schlüssel SK_{c} verschlüsselt (148) und anschließend den Multimedia-Inhalt oder das Steuerwort, die mit dem aktuellen Wurzelschlüssel SK_{c} verschlüsselt sind, überträgt (150), und
- das Endgerät den Multimedia-Inhalt oder das Steuerwort, die mit dem konstruierten Schlüssel SK_{c} verschlüsselt sind, mit Hilfe eines geheimen Codes C_{c}⁻¹ entschlüsselt (152), um den Multimedia-Inhalt oder das Steuerwort unverschlüsselt zu erhalten,
**dadurch gekennzeichnet, dass** das Verfahren Folgendes umfasst:
- im Voraus Eintragen (180) mehrerer geheimer Codes Cᵢ⁻¹ in das Endgerät, wobei jeder geheime Code Cᵢ⁻¹ ausschließlich die Entschlüsselung von Multimedia-Inhalt oder eines Steuerworts ermöglicht, die durch einen Sitzungsschlüssel SKᵢ verschlüsselt sind, der jeweils durch Diversifikation des Schlüssels SK_root mit einem Parameter Pᵢ erhalten wird, wobei einer dieser Parameter Pᵢ der Parameter P_{c} ist,
- Empfangen (122) des Parameters P_{c} durch das Endgerät in einer Nachricht, die außerdem einen Multimedia-Inhalt oder ein Steuerwort enthält, die durch den Sicherheitsprozessor entschlüsselt werden sollen, und
- in Reaktion auf den Empfang des Parameters P_{c} Auswählen (132) durch das Endgerät aus der Gesamtheit der eingetragenen geheimen Codes des geheimen Codes C_{c}⁻¹, der zu verwenden ist, um den Multimedia-Inhalt oder das Steuerwort, die mit dem Schlüssel SK_{c} verschlüsselt sind, als Funktion des Parameters P_{c} oder eines anderen in derselben Nachricht enthaltenen Parameters zu entschlüsseln.

2. Verfahren nach Anspruch 1, wobei jeder geheime Code Cᵢ⁻¹ ein von dem Endgerät direkt ausführbarer oder interpretierbarer Code ist, wobei dieser Code bereits durch seinen Sitzungsschlüssel SKᵢ parametrisiert worden ist, derart, dass er durch diesen Schlüssel SKᵢ bei seiner Ausführung oder Interpretation nicht erneut parametrisiert werden muss.

3. Verfahren nach Anspruch 1, wobei jeder geheime Code Cᵢ⁻¹ ein Schlüssel SKᵢ oder ein Kryptogramm dieses Schlüssels SKᵢ ist, der die Entschlüsselung des Multimedia-Inhalts oder des Steuerworts, die mit dem Schlüssel SKᵢ verschlüsselt sind, ermöglicht, wenn dieser verwendet wird, um einen Entschlüsselungsalgorithmus, der im Voraus in das Endgerät eingetragen worden ist, zu parametrisieren.

4. Verfahren nach einem der vorhergehenden Ansprüche, wobei die Nachricht, die den Parameter P_{c} enthält, eine ECM-Nachricht (Entitlement Control Message) ist.

5. Verfahren nach einem der vorhergehenden Ansprüche, wobei der Sicherheitsprozessor den Multimedia-Inhalt oder das Steuerwort, die verschlüsselt sind, zweimal überträgt, einmal mit dem spezifischen Schlüssel, der unabhängig von dem Parameter P_{c} bestimmt wird, und ein weiteres Mal mit dem Sitzungsschlüssel SK_{c}.

6. Verfahren nach Anspruch 5, wobei der Prozessor das Vorhandensein des Parameters P_{c} in der übertragenen Nachricht verifiziert (144) und wobei im Fall des Fehlens des Parameters P_{c} der Prozessor den Multimedia-Inhalt oder das Steuerwort nicht mit dem aktuellen Sitzungsschlüssel SK_{c} verschlüsselt (150).

7. Verfahren nach einem der vorhergehenden Ansprüche, wobei der eine oder die mehreren geheimen Codes C_{c} an das Endgerät vor dem Empfang der Nachricht, die den Parameter P_{c} enthält, über eine EMM-Nachricht (Entitlement Management Message) übertragen werden.

8. Verfahren nach einem der vorhergehenden Ansprüche, wobei das Verfahren das Eintragen (180) im Voraus in das Endgerät von streng mehr als zwei geheimen Codes Cᵢ⁻¹ umfasst.

9. Verfahren zum Entschlüsseln eines Multimedia-Inhalts oder eines Steuerworts durch ein Endgerät für die Ausführung eines Verfahrens nach einem der vorhergehenden Ansprüche, wobei das Verfahren Folgendes umfasst:
- Übertragen (128) eines Parameters P_{c} an einen Sicherheitsprozessor, der in dieses Endgerät eingebaut ist und den Multimedia-Inhalt oder das Steuerwort entschlüsseln kann,
- Empfangen durch das Endgerät des Multimedia-Inhalts oder des Steuerworts, die mit einem aktuellen Sitzungsschlüssel SK_{c} verschlüsselt sind, der durch den Sicherheitsprozessor durch Diversifikation eines Wurzelschlüssels SK_root als Funktion des von dem Endgerät übertragenen Parameters P_{c} konstruiert wird,
- Entschlüsseln (152) durch das Endgerät des Multimedia-Inhalts oder des Steuerworts, die mit dem Schlüssel SK_{c} verschlüsselt sind, mit Hilfe eines geheimen Codes C_{c}⁻¹, um den Multimedia-Inhalt oder das Steuerwort unverschlüsselt zu erhalten,
**dadurch gekennzeichnet, dass** das Verfahren Folgendes umfasst:
- im Voraus Eintragen (180) mehrerer geheimer Codes Cᵢ⁻¹ in das Endgerät, wobei jeder geheime Code Cᵢ⁻¹ ausschließlich die Entschlüsselung des Multimedia-Inhalts oder des Steuerworts ermöglicht, die durch einen Sitzungsschlüssel SKᵢ verschlüsselt sind, der jeweils durch Diversifikation des Schlüssels SK_root mit einem Parameter Pᵢ erhalten wird, wobei einer dieser Parameter Pᵢ der Parameter P_{c} ist,
- Empfangen (122) des Parameters P_{c} durch das Endgerät in einer Nachricht, die außerdem einen Multimedia-Inhalt oder ein Steuerwort enthält, die durch den Sicherheitsprozessor entschlüsselt werden sollen, und
- in Reaktion auf den Empfang des Parameters P_{c} Auswählen (132) durch das Endgerät aus der Gesamtheit der eingetragenen geheimen Codes des geheimen Codes C_{c}⁻¹, der verwendet werden soll, um den Multimedia-Inhalt oder das Steuerwort, die mit dem Schlüssel SK_{c} verschlüsselt sind, als Funktion des Parameters P_{c} oder eines anderen Parameters, der in derselben Nachricht enthalten ist, zu entschlüsseln.

10. Datenaufzeichnungsträger, **dadurch gekennzeichnet, dass** er Befehle enthält, um ein Verfahren nach einem der vorhergehenden Ansprüche auszuführen, wenn diese Befehle von einem elektronischen Rechner ausgeführt werden.

11. Endgerät zum Entschlüsseln eines Multimedia-Inhalts oder eines Steuerworts, die verschlüsselt sind, wobei das Endgerät (10) Folgendes ausführen kann:
- Übertragen eines Parameters P_{c} an einen Sicherheitsprozessor, der in dieses Endgerät eingebaut ist, der den Multimedia-Inhalt oder das Steuerwort entschlüsseln kann,
- Empfangen des Multimedia-Inhalts oder des Steuerworts, die mit einem aktuellen Sicherheitsschlüssel SK_{c} verschlüsselt sind, der durch den Sicherheitsprozessor durch Diversifikation eines Wurzelschlüssels SK_root als Funktion des von dem Endgerät übertragenen Parameters P_{c} konstruiert wird,
- Entschlüsseln des Multimedia-Inhalts oder des Steuerworts, die mit dem Schlüssel SK_{c} verschlüsselt sind, mit Hilfe eines geheimen Codes C_{c}⁻¹, um den Multimedia-Inhalt oder das Steuerwort unverschlüsselt zu erhalten,
**dadurch gekennzeichnet, dass**:
- das Endgerät einen Speicher (82) umfasst, in den im Voraus mehrere geheime Codes Cᵢ¹ eingetragen worden sind, wobei jeder geheime Code Cᵢ⁻¹ ausschließlich die Entschlüsselung des Multimedia-Inhalts oder des Steuerworts ermöglicht, die durch einen Sitzungsschlüssel SKᵢ verschlüsselt sind, der jeweils durch Diversifikation des Schlüssels SK_root mit einem Parameter Pᵢ erhalten wird, wobei einer dieser Parameter Pᵢ der Parameter P_{c} ist, und
- das Endgerät Folgendes ausführen kann:
• Empfangen des Parameters P_{c} in einer Nachricht, die außerdem einen Multimedia-Inhalt oder ein Steuerwort enthält, die von dem Sicherheitsprozessor zu entschlüsseln sind, und
• Auswählen unter der Gesamtheit der eingetragenen geheimen Codes des geheimen Codes C_{c}⁻¹, der verwendet werden soll, um den Multimedia-Inhalt oder das Steuerwort, die mit dem Schlüssel SK_{c} verschlüsselt sind, als Reaktion auf den Empfang des Parameters P_{c} als Funktion des Parameters P_{c} oder eines anderen Parameters, der in derselben Nachricht enthalten ist, zu entschlüsseln.

## Claims

1. Method for protection of the transmission, of a multimedia content or of a control word, between a security processor introduced into a receiver terminal and this receiver terminal, in which:
- the security processor constructs (146) a current session key SK_{c} by diversification of a root key SK_root as a function of a parameter P_{c} transmitted by the terminal,
- the security processor decrypts (140) the multimedia content or the control word then encrypts (148) the decrypted multimedia content or the decrypted control word with the current key SK_{c} and, finally, transmits (150) to the terminal the multimedia content or the encrypted control word with the current session key SK_{c}, and
- the terminal decrypts (152) the multimedia content or the encrypted control word with the constructed key SK_{c} by means of a secret code C_{c}⁻¹ in order to obtain the multimedia content or the control word in unencrypted form,
**characterized in that** the method comprises:
- the recording (180) in advance in the terminal of several secret codes C_{c}⁻¹, each secret code Cᵢ⁻¹ allowing only the decryption of the multimedia content or of the encrypted control word by a respective session key SKᵢ obtained by diversification of the key SK_root with a parameter Pᵢ, one of these parameters Pᵢ being the parameter Pc,
- the reception (122) of the parameter P_{c} by the terminal in a message also containing a multimedia content or a control word to be decrypted by the security processor, and
- in response to the reception of the parameter P_{c}, the selection (132) by the terminal, from amongst all of the secret codes recorded, of the secret code C_{c}⁻¹ to be used for decrypting the multimedia content or the encrypted control word with the key SK_{c}, as a function of the parameter P_{c} or of another parameter contained within the same message.

2. Method according to Claim 1, in which each secret code Cᵢ⁻¹ is a code directly executable or interpretable by the terminal, this code being already parameterized by its session key SKᵢ in such a manner as not to have to be parameterized again by this key SKᵢ when it is executed or interpreted.

3. Method according to Claim 1, in which each secret code Cᵢ⁻¹ is a key SKᵢ or a cryptogram of this key SKᵢ making possible the decryption of the multimedia content or of the encrypted control word with the key SKᵢ when the latter is used for parameterizing a decryption algorithm pre-recorded in the terminal.

4. Method according to any one of the preceding claims, in which the message containing the parameter P_{c} is an ECM (Entitlement Control Message) message.

5. Method according to any one of the preceding claims, in which the security processor transmits (150) the multimedia content or the control word encrypted twice, once by a specific key determined independently of the parameter P_{c} and once more by the session key SK_{c}.

6. Method according to Claim 5, in which the processor verifies (144) the presence of the parameter P_{c} within the transmitted message and, in the case of absence of the parameter P_{c}, the processor does not encrypt (150) the multimedia content or the control word with the current session key SK_{c}.

7. Method according to any one of the preceding claims, in which the secret code or codes C_{c}⁻¹ are transmitted to the terminal prior to the reception of the message containing the parameter P_{c} by means of an EMM (Entitlement Management Message) message.

8. Method according to any one of the preceding claims, in which the method comprises the recording (180) in advance in the terminal of strictly more than two secret codes Cᵢ⁻¹.

9. Method for decrypting a multimedia content or a control word by a terminal for the implementation of a method according to any one of the preceding claims, the method comprising:
- the transmission (128) of a parameter P_{c} to a security processor, introduced into this terminal, capable of decrypting the multimedia content or the control word,
- the reception by the terminal of the multimedia content or of the control word encrypted with a current session key SK_{c} constructed by the security processor by diversification of a root key SK_root as a function of the parameter P_{c} transmitted by the terminal,
- the decryption (152), by the terminal, of the multimedia content or of the encrypted control word with the key SK_{c} by means of a secret code C_{c}⁻¹ in order to obtain the multimedia content or the control word in unencrypted form,
**characterized in that** the method comprises:
- the recording (180) in advance in the terminal of several secret codes Cᵢ⁻¹ each secret code Cᵢ⁻¹ allowing only the decryption of the multimedia content or of the encrypted control word by a respective session key SKᵢ obtained by diversification of the key SK_root with a parameter Pᵢ, one of these parameters Pᵢ being the parameter P_{c},
- the reception (122) of the parameter P_{c} by the terminal within a message also containing a multimedia content or a control word to be decrypted by the security processor, and
- in response to the reception of the parameter P_{c}, the selection (132) by the terminal, from amongst all of the recorded secret codes, of the secret code C_{c}⁻¹ to be used for decrypting the multimedia content or the encrypted control word with the key SK_{c} as a function of the parameter P_{c} or of another parameter contained within the same message.

10. Information recording medium, **characterized in that** it comprises instructions for the execution of a method according to any one of the preceding claims, when these instructions are executed by an electronic computer.

11. Terminal for decrypting a multimedia content or an encrypted control word, the terminal (10) being capable of:
- transmitting a parameter P_{c} to a security processor, introduced into this terminal, capable of decrypting the multimedia content or the control word,
- receiving the multimedia content or the control word encrypted with a current session key SK_{c} constructed by the security processor by diversification of a root key SK_root as a function of the parameter P_{c} transmitted by the terminal,
- decrypting the multimedia content or the control word encrypted with the key SK_{c} by means of a secret code C_{c}⁻¹ in order to obtain the multimedia content or the control word in unencrypted form,
**characterized in that**:
- the terminal comprises a memory (82) in which several secret codes Cᵢ⁻¹ are recorded in advance, each secret code Cᵢ⁻¹ allowing only the decryption of the multimedia content or of the encrypted control word by a respective session key SKᵢ obtained by diversification of the key SK_root with a parameter Pᵢ, one of these parameters Pᵢ being the parameter P_{c}, and
- the terminal is capable of:
• receiving the parameter P_{c} in a message also containing a multimedia content or a control word to be decrypted by the security processor, and
• selecting, from amongst all of the recorded secret codes, the secret code C_{c}⁻¹ to be used for decrypting the multimedia content or the encrypted control word with the key SK_{c} as a function of the parameter P_{c} or of another parameter contained within the same message, in response to the reception of the parameter P_{c}.
